# EUROPEAN PATENT APPLICATION

(11) **EP 2 259 574 A1**
(43) Date of publication of application: **08.12.2010**
(21) Application number: 09727696.8
(22) Date of filing: 27.03.2009
(51) Int. Cl.: H04N 5/335

(54) **SMEAR CORRECTION METHOD, AND SOLID-STATE IMAGE PICKUP APPARATUS AND IMAGE PICKUP DEVICE WHICH USE SAME**

(30) Priority: 01.04.2008 JP 2008094692
(71) Applicant: Panasonic Corporation, Kadoma-shi Osaka 571-8501 (JP)
(72) Inventor: NISHIZAWA, Masato, Osaka 540-6207 (JP); KAZUNAGA, Miyake, Osaka 540-6207 (JP)
(74) Representative: Grünecker, Kinkeldey, Stockmair & Schwanhäusser Anwaltssozietät
(86) International application number: PCT/JP2009/001397
(87) International publication number: WO 2009/122689

(57) **Abstract**

A multiple-stage vertical CCD, a vertical transfer section for alternately transferring the first signal containing a smear signal and image signal and the second signal containing only a smear signal to each register of vertical registers, a horizontal section for alternately outputting the first signal and the second signal from a horizontal register, and a signal subtractor for subtracting the second signal from the first signal are included. A smear correction method of gaining an image signal without smear signal by subtracting the second signal from the first signal is provided.

## Description

### TECHNICAL FIELD

The present invention relates to solid-state imaging devices, smear correction methods, and imaging apparatuses using the device and method, and more particularly to solid-state imaging devices with smear correction function, smear correction methods for solid-state imaging devices, and imaging apparatuses using the device and method.

### BACKGROUND ART

In an imaging apparatus employing a solid-state imaging element, such as CCD (Charge Coupled Device) image sensor, a smear is generated when the light directly enters a vertical register. One known method of eliminating a smear is the use of a solid-state imaging element that allows simultaneous two-line read-out. An image charge is transferred via a vertical transfer section, and this solid-state imaging element simultaneously reads out two lines of this charge via two horizontal transfer sections, and outputs image information of all pixels per filed.
(For example, refer to Patent Literature 1.)

In this method, an image output of one field is read out via one of the two horizontal transfer sections of the solid-state imaging element. At the same time, an image output containing only a smear component is read out as the image output of the other field via the other horizontal transfer section. A subtracting section applies subtraction and combines the image output of each field read out via each horizontal transfer section, so as to output image information without smear component.

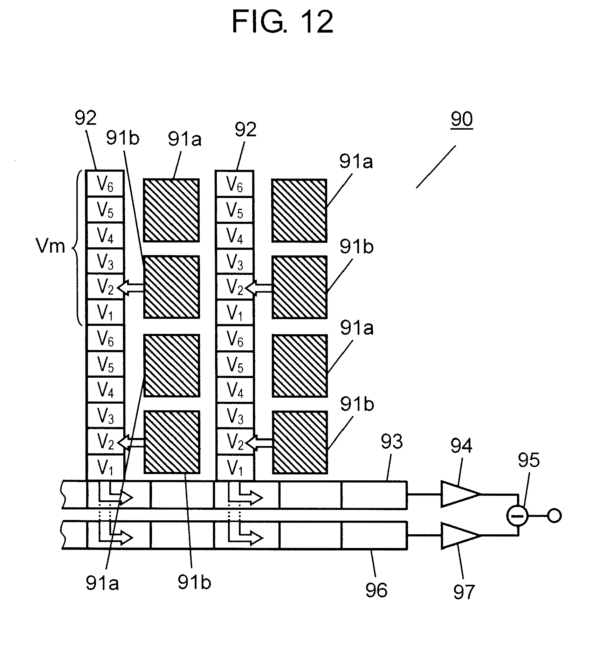

Fig. 12 shows a conventional solid-state imaging device employing a solid-state imaging element. In Fig. 12, light-receiving section 91a and light-receiving section 91b are alternately disposed in a vertical direction in solid-state imaging device 90. An image output of light-receiving section 91a for one field is read out via horizontal register 93, which is one of the horizontal transfer sections. At the same time, an image output containing only smear component is read out as an image output of light-receiving section 91b for the other field via horizontal register 96, which is the other horizontal transfer section. Then, subtractor 95, which is a subtracting section, subtracts and combines the image output of each field read out via each of horizontal registers 93 and 96, so as to gain an image signal without smear. The operation of reading out the image output from one light-receiving section and also reading out the image output containing only smear component from the other light-receiving section is repeated for light-receiving section 91a and light-receiving section 91b alternately.

However, the conventional art is subject to influences of characteristics of transfer channels due to the use of two horizontal registers as transfer channels. Accordingly, it is difficult to properly eliminate smear. In addition, since this is the solid-state imaging device that simultaneously reads out two lines to output image information for all pixels per field, image information for all pixels is output for one line at a time for two lines alternately. This results in slow speed in reading out image information.
Patent Literature 1: Japanese Patent Unexamined Publication No. H6-339077

### SUMMARY OF THE INVENTION

A solid-state imaging device of the present invention employs a multiple-stage vertical CCD, such as a double-stage vertical CCD and triple-stage vertical CCD, and includes a vertical transfer section that alternately transfers the first signal of an image signal including a smear signal and the second signal of only a smear signal to each register of vertical registers, a horizontal transfer section that alternately outputs the first signal and the second signal from a horizontal register, and a signal subtractor for subtracting the second signal from the first signal. An image signal without smear signal is gained by subtracting the second signal from the first signal.

With the above configuration, smear can be properly eliminated without being affected by characteristics of a transfer channel. In addition, since image information is not taken out from light-receiving elements alternately, as in the conventional art, the image information can be read out faster and seamlessly.

### BRIEF DESCRIPTION OF DRAWINGS

Fig. 1 is a configuration of an essential part of a solid-state imaging device in accordance with a first exemplary embodiment of the present invention.
Fig. 2A illustrates an operation of feeding an image signal and a smear signal of the solid-state imaging device in accordance with the first exemplary embodiment of the present invention.
Fig. 2B illustrates an operation of feeding the image signal and the smear signal of the solid-state imaging device in accordance with the first exemplary embodiment of the present invention.
Fig. 2C illustrates an operation of feeding the image signal and the smear signal of the solid-state imaging device in accordance with the first exemplary embodiment of the present invention.
Fig. 2D illustrates an operation of feeding the image signal and the smear signal of the solid-state imaging device in accordance with the first exemplary embodiment of the present invention.
Fig. 2E illustrates an operation of feeding the image signal and the smear signal of the solid-state imaging device in accordance with the first exemplary embodiment of the present invention.
Fig. 3 illustrates a concept of a smear correction method in accordance with the first exemplary embodiment of the present invention.
Fig. 4 illustrates a configuration of an essential part of an imaging apparatus in accordance with the first exemplary embodiment of the present invention.
Fig. 5A is an image captured in normal exposure by the solid-state imaging apparatus in accordance with the first exemplary embodiment of the present invention.
Fig. 5B is an image when a charge is not sent in the solid-state imaging apparatus in accordance with the first exemplary embodiment of the present invention.
Fig. 5C is an image after using the smear correction method in accordance with the first exemplary embodiment of the present invention.
Fig. 6 illustrates a configuration of an essential part of an imaging apparatus in accordance with a second exemplary embodiment of the present invention.
Fig. 7A illustrates light intensity/voltage characteristic in normal exposure of the imaging apparatus in accordance with the second exemplary embodiment of the present invention.
Fig. 7B illustrates light intensity/voltage characteristic in short exposure of the imaging apparatus in accordance with the second exemplary embodiment of the present invention.
Fig. 7C illustrates combined light-intensity/voltage characteristic when light intensity/voltage characteristics of the imaging apparatus is combined in accordance with the second exemplary embodiment of the present invention.
Fig. 7D illustrates combined light intensity/voltage characteristic of the imaging apparatus after correcting gray level in accordance with the second exemplary embodiment of the present invention.
Fig. 8 is a flow chart illustrating the operation of the imaging apparatus in accordance with the second exemplary embodiment of the present invention.
Fig. 9 is a configuration of an essential part of a solid-state imaging device in accordance with a third exemplary embodiment of the present invention.
Fig. 10A illustrates the operation of feeding an image signal and a smear signal of the solid-state imaging device in accordance with the third exemplary embodiment of the present invention.
Fig. 10B is the operation of feeding the image signal and the smear signal of the solid-state imaging device in accordance with the third exemplary embodiment of the present invention.
Fig. 10C is the operation of feeding the image signal and the smear signal of the solid-state imaging device in accordance with the third exemplary embodiment of the present invention.
Fig. 11 is a system diagram of a smear correction method and dynamic range processing in accordance with the third exemplary embodiment of the present invention.
Fig. 12 illustrates fragmentary a configuration of a conventional solid-state imaging device.

### REFERENCE MARKS IN THE DRAWINGS

1, 61 Light-receiving element
2, 62 Vertical register
3, 63 Horizontal register
4, 64 FD (Floating Diffusion)
5 AFE (Analog Front End) and A/D
6, 66, 7 Transfer section
7, 7a, 7b, 26, 46, 67, 67a, 71 Image signal
8, 68 Smear generating source
9, 9a, 9b, 9c, 9d, 9e, 69, 69a, 69b, 69c Smear signal

### DETAILED DESCRIPTION OF PREFERRED EMBODIMENTS

Exemplary embodiments of the present invention are described below with reference to drawings.

### (FIRST EXEMPLARY EMBODIMENT)

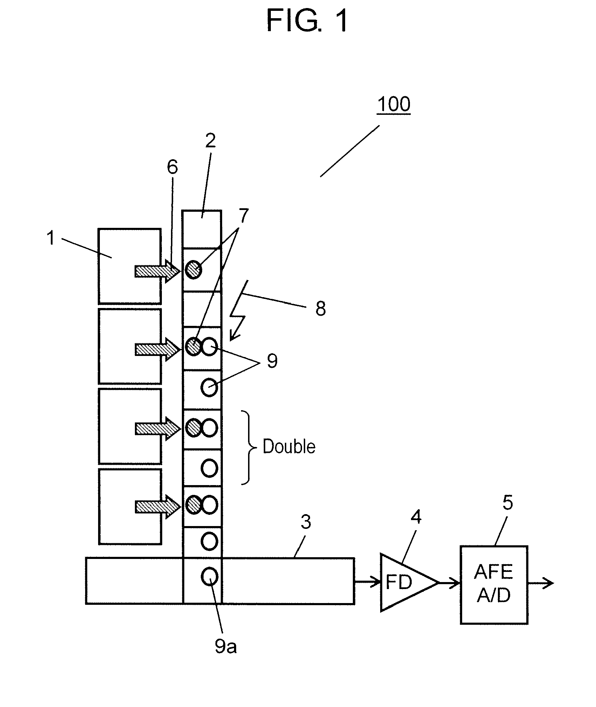

Fig. 1 shows a configuration of an essential part of a solid-state imaging device in the first exemplary embodiment of the present invention. To simplify description, only one vertical row of light-receiving elements 100 and also only one vertical row of vertical registers 2 are illustrated in solid-state imaging device 100. In actual solid-state imaging device 100, light-receiving elements 1 and vertical registers 2 are aligned in multiple rows so that light-receiving elements 1 are disposed in matrix.

In Fig. 1, four light-receiving elements 1 are vertically aligned. Vertical registers 2, which are double the number of light-receiving elements 2, are aligned, and horizontal register 3 is connected to their bottom end. Charges are generated when the light enters light-receiving elements 1. Transfer sections 6 indicated by black arrows in Fig. 1 carry the charges generated in light-receiving elements 1 to vertical registers 2. Since the number of vertical registers 2 is double the number of light-receiving elements 1, the charges generated in light-receiving elements 1 are retained in every other vertical registers 2 as image signals 7. In Fig. 1, four charges of light-receiving elements 1 in normal exposure are carried to every other vertical registers 2, and thus the charges of light-emitting elements 1 are not sent to other vertical registers.

On the other hand, a smear charge is accumulated in vertical register 2 when the light from smear generating source 8, such as the sun and a high-intensity lamp, enters vertical register 2. Fig. 1 shows the case that the smear charge, i.e., smear signal 9, has entered all registers on and after the fourth vertical register from the top. In Fig. 1, white circles indicate smear signals 9.

Image signals 7 and smear signals 9 accumulated in each register of vertical registers 2 are fed in sequence from vertical registers 2 toward horizontal register 3 such that signals in one register is pushed out at a time. Then, the signals fed from vertical register 2 to horizontal register 3 are sent from horizontal register 3 to FD (Floating Diffusion) 4, and then to AFE (Analog Front End) and A/D 5.

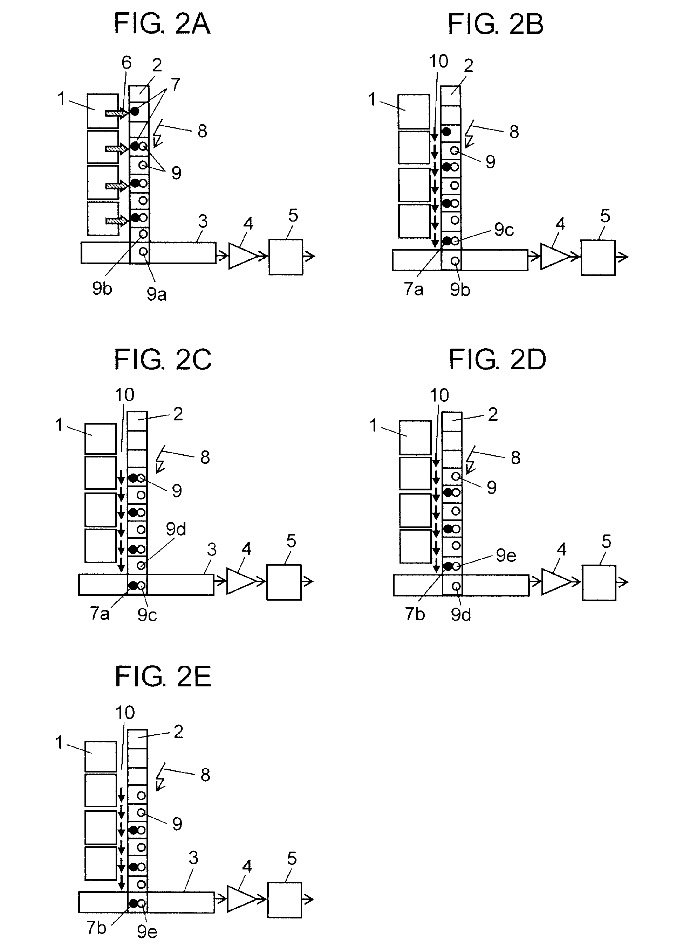

Figs. 2A to 2E show the operation of feeding the image signal and smear signal of the solid-state imaging device in the first exemplary embodiment of the present invention. The operation takes place from Figs. 2A to 2B, 2C, 2D, 2E in sequence.

Fig. 2A is substantially the same as Fig. 1, and shows the state that the charge generated by the light applied to light-receiving element 1 is fed to every other register in vertical registers 2 as image signal 7. At the same time, Fig. 2A shows the state that the light from smear generating source 8 is applied to vertical register 2, and smear signals 9 have entered on and after a register, to which the light is applied, up to the horizontal register. In Fig. 2A, smear signal 9a is fed to horizontal register 3. Smear signal 9a is sent from horizontal register 3 to FD4, and then to AFE and A/D 5.

Then, in Fig. 2B, image signal 7 and smear signals 9 in each register of vertical registers 2 are fed in sequence for one register at a time as shown by arrow 10. In other words, smear signal 9b in a register above smear signal 9a in Fig. 2A is fed to horizontal register 3 in subsequent Fig. 2B. Smear signal 9b is sent from horizontal register 3 to FD 4, and then to AFE and A/D 5.

In the same way, in Fig. 2C, image signal 7a and smear signal 9c are fed to horizontal register 3, and only smear signal 9d is fed to horizontal register 3 in Fig. 2D. In Fig. 2E, image signal 7b and smear signal 9e are fed to horizontal register 3.

It is apparent from the movement shown in Figs. 2A to 2E that solid-state imaging device 100 in the first exemplary embodiment of the present invention alternately feeds a first signal of image signal 7 including smear signal 9 and a second signal of only smear signal 9 from vertical register 2 to horizontal register 3.

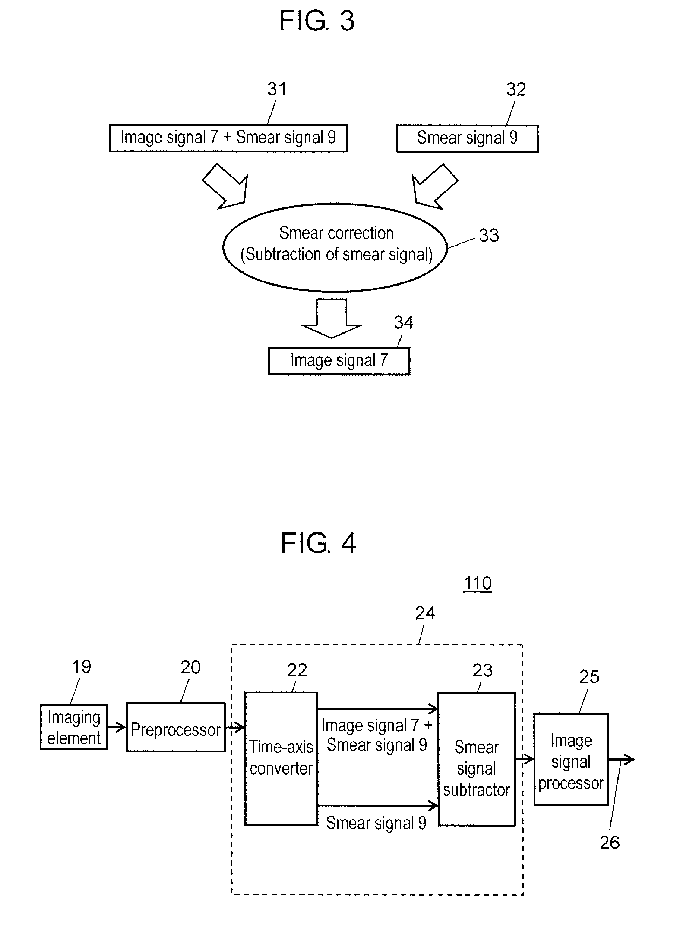

Fig. 3 shows a concept of a smear correction method in the first exemplary embodiment of the present invention. Solid-state imaging device 100 in the first exemplary embodiment of the present invention utilizes the above regularity, and provides a subtractor (not illustrated) after AFE and A/D 5. This subtractor subtracts second signal 32 of only smear signal 9 from first signal 31 of image signal 7 including smear signal 9 to gain image signal 7 without smear signal 9.

Fig. 4 shows a configuration of an essential part of an imaging apparatus in the first exemplary embodiment of the present invention. In imaging apparatus 110, preprocessor 20, which is FD4 and AFE and A/D 5, amplifies signals generated by imaging element 19 and also converts them from analog to digital signals in Fig. 4. These signals are sequentially output as the first signal of image signal 7 including smear signal 9 and the second signal of only smear signal 9. Then, time-axis converter 22 aligns time axes of the first signal and the second signal, and outputs these signals separately. Smear signal subtractor 23 calculates image signal 7 without smear signal 9 by subtracting the second signal from the first signal. Image signal processor 25 outputs this signal as image signal 26.

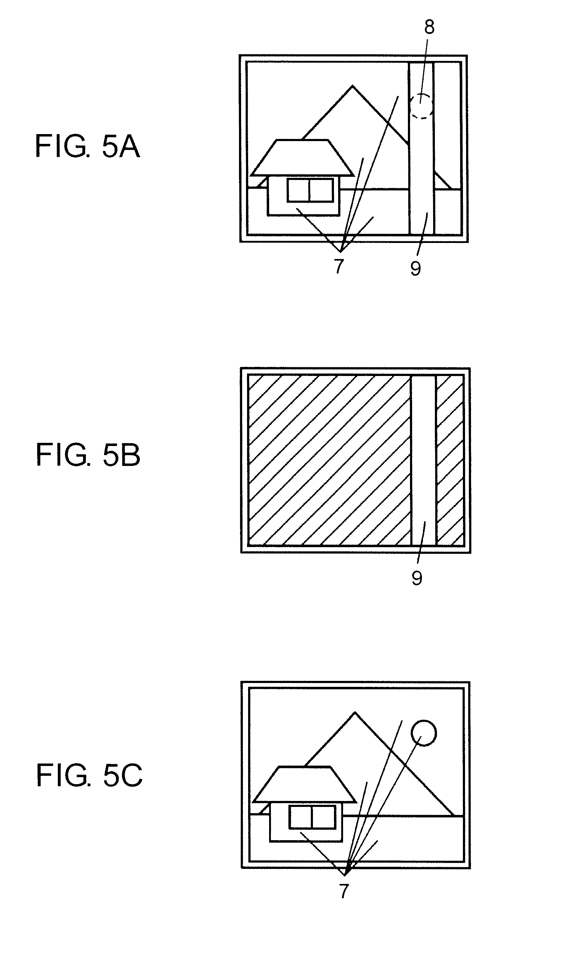

Fig. 5A is an image captured in normal exposure by the solid-state imaging apparatus in the first exemplary embodiment of the present invention. Fig. 5B is an image when charges are not sent in the solid-state imaging apparatus in the first exemplary embodiment of the present invention. Fig. 5C is an image after using the smear correction method in the first exemplary embodiment of the present invention.

In Fig. 5A, image signals for land, house, mountain, and sky are gained as image signals 7. A vertical strip at the left side of a screen is smear signal 9. Smear signal 9 is generated by the sunlight, which is smear generating source 8. Smear generating source 8 is indicated by a dotted line. On the other hand, Fig. 5B shows smear signal 9 generating a charge in light-receiving element 1 when no charge is transferred from light-receiving element 1, i.e., so-called zero exposure time.

In the present invention, image signal 7 without smear signal 9, shown in Fig. 5C, is gained by subtracting smear signal 9 in Fig. 5B from image signal 7 including smear signal 9 in Fig. 5A. In Fig. 5C, smear correction is also applied to the sun, which is smear generating source 8, as one image signal.

As described above, both the image signal including smear signal and the smear signal are fed via common horizontal register 3. This eliminates an influence of characteristics of transfer channel, compared to the conventional art that feeds signals via separate horizontal registers. Accordingly, error-reduced smear correction becomes feasible.

In addition, since image information is not alternately retrieved from the light-receiving elements, the image information can be read out faster. Furthermore, there is no image data to be abandoned for smear correction in the present invention.

Smear correction may be applied to image signals gained from all pixels of imaging elements, and output them as image signals, so as to eliminate wasted effective pixels in the imaging element.

### (SECOND EXEMPLARY EMBODIMENT)

Next is described the second exemplary embodiment of the present invention. An imaging apparatus in the second exemplary embodiment of the present invention features switchover between activation of a smear correction mode for correcting a smear generated by a high-intensity light source and activation of a high dynamic range mode for increasing sharpness that has reduced due to many saturated pixels, depending on the saturation state of light-receiving elements.

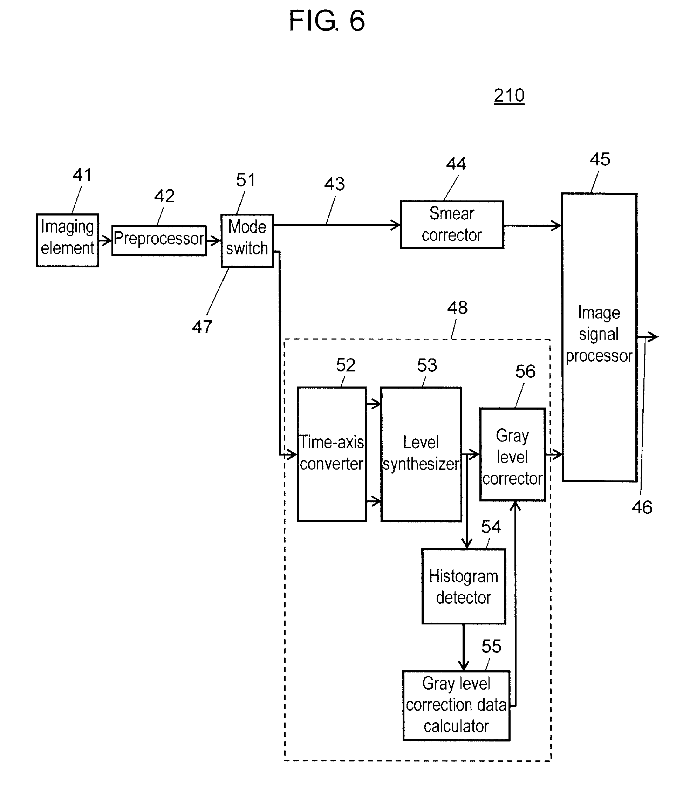

Fig. 6 shows a configuration of an essential part of the imaging apparatus in the second exemplary embodiment of the present invention. In Fig. 6, imaging apparatus 210 includes imaging element 41 that alternately outputs two types of image signals with different exposure amount, such as normal exposure and short exposure, in one field period; preprocessor 42 for amplifying signals and also converting from analog signals to digital signals; and mode switch 51 for switching between modes based on an evaluation result of whether the number of saturated pixels in imaging element 41 is less or not less than a predetermined threshold. Imaging apparatus 210 also includes smear corrector 44 for correcting smear when the number of saturated pixels of imaging element 41 is less than the predetermined threshold, and image signal processor 45 for processing image signals. When smear corrector 44 corrects smear, a smear-corrected image is output from image signal processor 45 as image signal 46.

In addition, high dynamic range processor 48 is provided between mode switch 51 and image signal processor 45. High dynamic range processor 48 applies high dynamic range processing when the number of saturated pixels is the same or higher than the predetermined threshold.

Next, a configuration of high dynamic range processor 48 is detailed. High dynamic range processor 48 includes time-axis converter 52 for aligning time axes of two types of image signals with different exposure amounts and outputting these signals separately, level synthesizer 53 for combining these two types of image signals, histogram data detector 54 for detecting luminance histogram of a combined image signal, gray level correction data calculator 55 for calculating gray level based on this histogram, and gray level corrector 56 for correcting the gray level of the combined image signal in accordance with a predetermined gray level. Then, the combined image after correcting gray level, which is an output from gray level corrector 56, is output as an image signal via image signal processor 45.

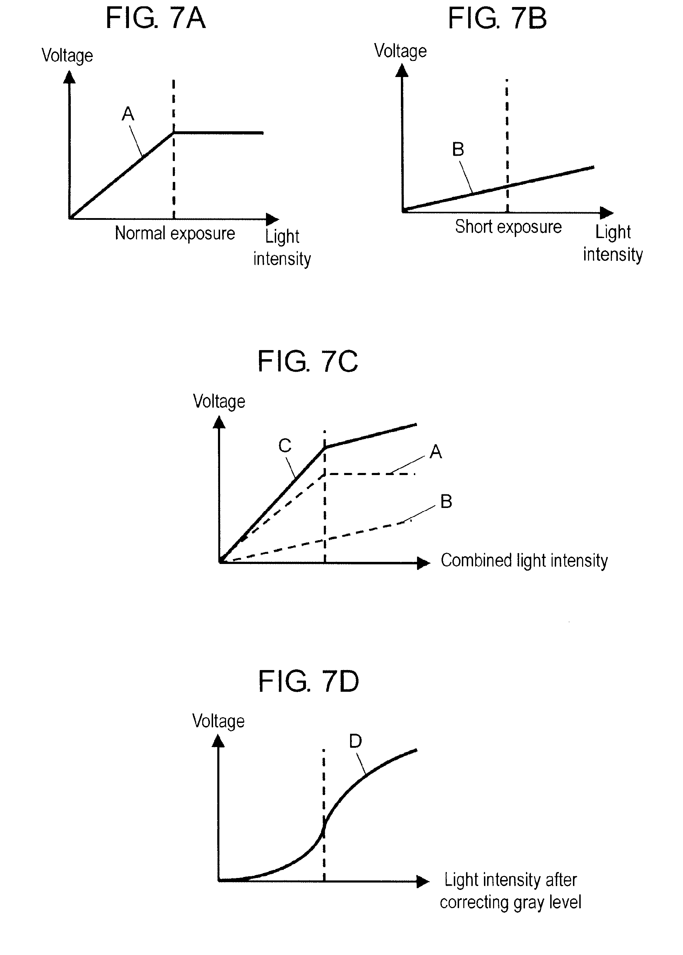

The smear correction method of the present invention is already described in the first exemplary embodiment, and thus its description is omitted here. High dynamic range processing is described next. Figs. 7A to 7D show a concept of high dynamic range processing of the imaging apparatus in the second exemplary embodiment of the present invention. In Figs. 7A to 7D, the horizontal axis is an light intensity applied to imaging element 41, and the vertical axis is voltage generated in imaging element 41. In normal exposure, imaging element 41, such as CCD, shows the characteristic that voltage saturates and does not increase when the light intensity exceeds a predetermined amount, as shown by broken line A in Fig. 7A. On the other hand, voltage continues to increase without saturation in short exposure, as shown by straight line B in Fig. 7B. Therefore, the characteristic in normal exposure and the characteristic in short exposure are added and combined as broken line C in Fig. 7C. By this combination, the characteristic that voltage steadily increases even the light intensity exceeds the predetermined amount is achieved.

In addition, if gray level correction is applied to broken line C in Fig. 7C, curve D shown in Fig. 7D is achieved. Image signal processor 45 processes the image signal using the characteristic after correcting gray level, and outputs a sharp image signal.

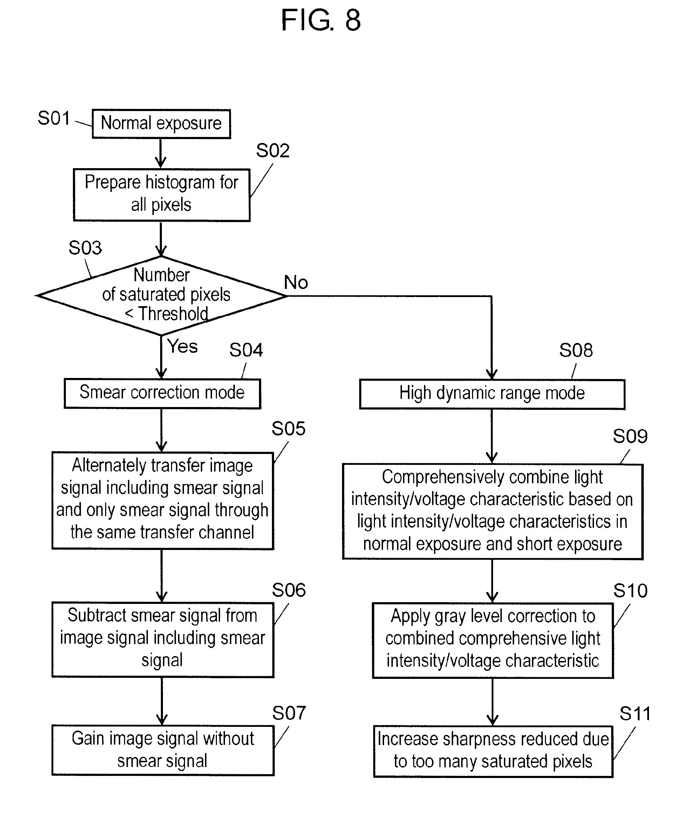

Fig. 8 is a flow chart of the operation of the imaging apparatus in the second exemplary embodiment of the present invention. First, an image light is emitted to imaging element 41 of imaging apparatus 210 in normal exposure (Step S01). Then, as preprocessing, a histogram is prepared for all pixels of imaging element 41 (Step S02). Preprocessor 42, as a saturated pixels determination section, counts the number of saturated pixels in imaging element 41, and compares this number with a predetermined threshold (Step S03). If the number of saturated pixels is less than the threshold (Yes in Step S03), a smear correction mode is activated (Step S04). As the operation of the smear correction mode, an image signal including a smear signal and a smear signal are alternately transferred from imaging element 41 through the same transfer channel (Step S05). The smear signal is subtracted from the image signal including smear signal (Step S06). Accordingly, the image signal without the smear signal is gained (Step S07).

On the other hand, if the number of saturated pixels in imaging element 41 is not less than the threshold when preprocessor 42 compares the number with the threshold in Step S03 (No in Step S03), the high dynamic range mode is activated (Step S08). As the operation of the high dynamic range mode, an light intensity/voltage characteristic in normal exposure and an light intensity/voltage characteristic in short exposure are combined to gain the comprehensive light intensity/voltage characteristic (Step S09). A gray level correction is applied to the combined light intensity/voltage characteristic (Step S10). The image signal is then processed based on the light intensity/voltage characteristic after correcting gray level, so as to increase the sharpness that has reduced due to many saturated pixels (Step S11).

As described above, imaging apparatus 210 in the second exemplary embodiment of the present invention switches between activation of the smear correction mode for correcting a smear caused by high-intensity light source and activation of the high dynamic range mode for increasing the sharpness that has reduced due to many saturated pixels, depending on the saturated state of light-receiving elements. Accordingly, easily viewable images according to the state can be achieved.

### (THIRD EXEMPLARY EMBODIMENT)

Next, the third exemplary embodiment of the present invention is described. An imaging apparatus in the third exemplary embodiment of the present invention employs a vertical register that has triple or more the number of normal transfer stages for transferring a charge of a light-receiving element in normal exposure, only a smear charge without transferring a charge of the light-receiving element, and a charge of the light-receiving element in short exposure. Smear correction and high dynamic range processing are applied simultaneously by using imaging elements outputting respective image signals and their signals. In the description, a triple-stage vertical CCD that has triple the number of normal transfer stages is used.

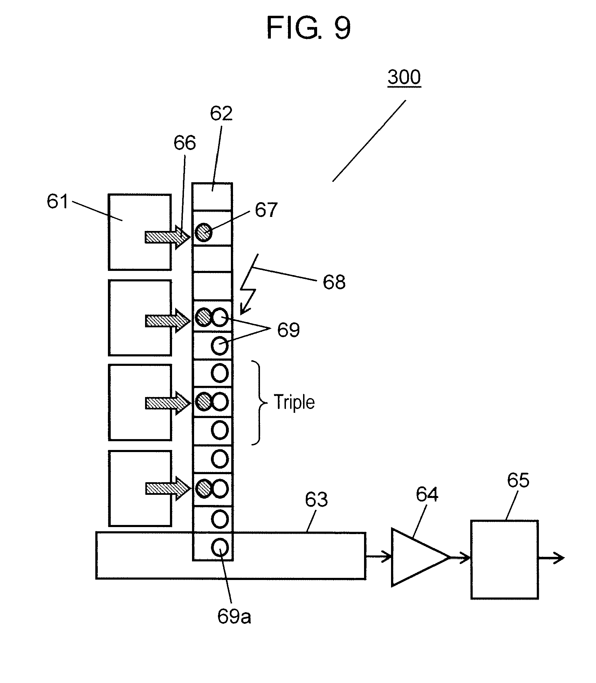

Fig. 9 illustrates a configuration of an essential part of a solid-state imaging device in the third exemplary embodiment of the present invention. In Fig. 9, solid-state imaging device 300 includes one vertical row of light-receiving elements 61 and one vertical row of vertical registers 62. However, as in the first exemplary embodiment, actual solid-state imaging devices have multiple rows, not one, of these components, and thus light-receiving elements 61 are disposed in matrix.

In Fig. 9, four light-receiving elements 61 are vertically aligned. The number of vertical registers 62 aligned is triple the number of light-receiving elements 61, and they are connected to horizontal register 63 at their bottom end. When a light is applied to light-receiving element 61, a charge is generated. Transfer section 66 indicated by a black arrow in Fig. 9 carries the charge generated in light-receiving element 61 to vertical register 62. Since, the number of vertical registers 62 is triple the number of light-receiving elements 61, the charge generated in each light-receiving element 61 is retained in every third vertical register 62 as image signal 67 indicated by a black circle. In Fig. 9, four charges of light-receiving elements 61 in normal exposure are carried to every third vertical registers 62. The charges of light-receiving elements 61 are not sent to other vertical registers.

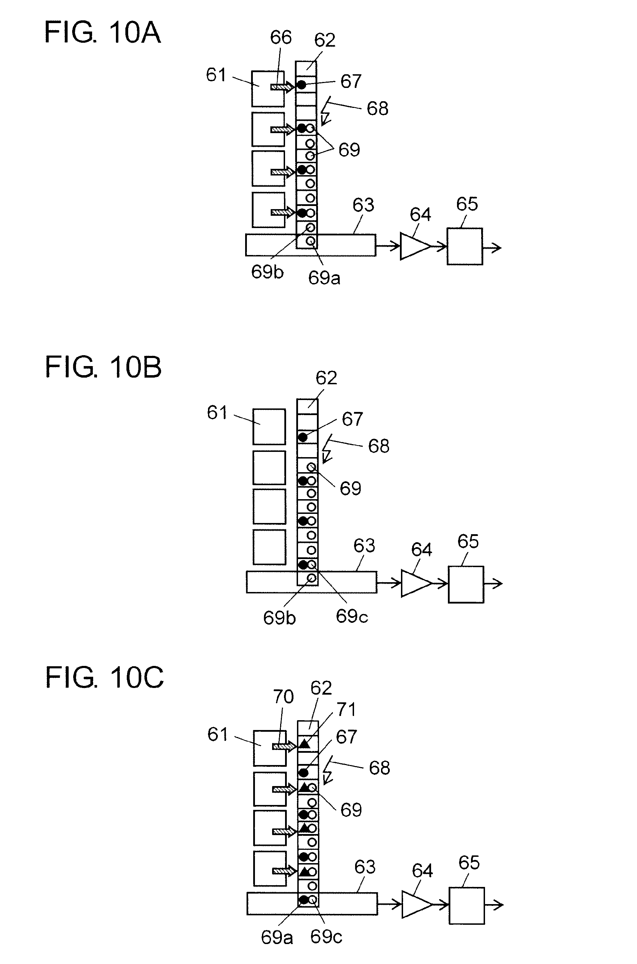

Fig. 10A to Fig. 10C illustrate how image signals and smear signals are fed in the solid-state imaging device in the third exemplary embodiment of the present invention. These drawings show output states of signals transferring a charge of light-receiving element in normal exposure, only a smear charge without transferring a charge of the light-receiving element, and a charge of light-receiving element in short exposure, respectively.

Fig. 10A shows the state when normal exposure is applied to light-receiving element 61. Light-receiving element 61 generates a charge when the light is applied, and transfer section 66 feeds this charge as image signal 67 to every third register in vertical registers 62. If smear generating source 68, such as sunlight, exists, smear signal 69 enters from vertical register 62 that receives a strong light up to horizontal register 63. At a cross point of vertical register 62 and horizontal register 63, smear signal 69 or smear signal 69 and image signal 67 are transferred to horizontal register 63. The signal is then sent in sequence from horizontal register 63 to FD 64 and AFE and A/D 65. At timing in Fig. 10A, smear signal 69a is sent from horizontal register 63 to FD 64 and AFE and A/D 65.

Fig. 10B shows the state that only a smear charge without transferring a charge of the light-receiving element enters vertical register 62. If smear generating source 68 exists, smear signal 69 enters from vertical register 62 that receives a strong light, such as sunlight, to horizontal register 63. At timing in Fig. 10B, smear signal 69b is sent to FD64 and AFE and A/D 65.

Fig. 10C shows the state when short exposure is applied to light-receiving element 61. A charge is generated when a light is applied to light-receiving element 61 in short exposure, and transfer section 7 feeds this charge as image signal 71 in short exposure to every third register in vertical registers 62. In Fig. 10C, image signal 71 in short exposure is indicated by a black triangle to distinguish from image signal 67 in normal exposure indicated by the black circle. If smear generating source 68 exists, smear signal 69 enters from vertical register 62 that receives a strong light, such as sunlight, to horizontal register 63. At timing in Fig. 10C, image signal 67a and smear signal 69c are sent.

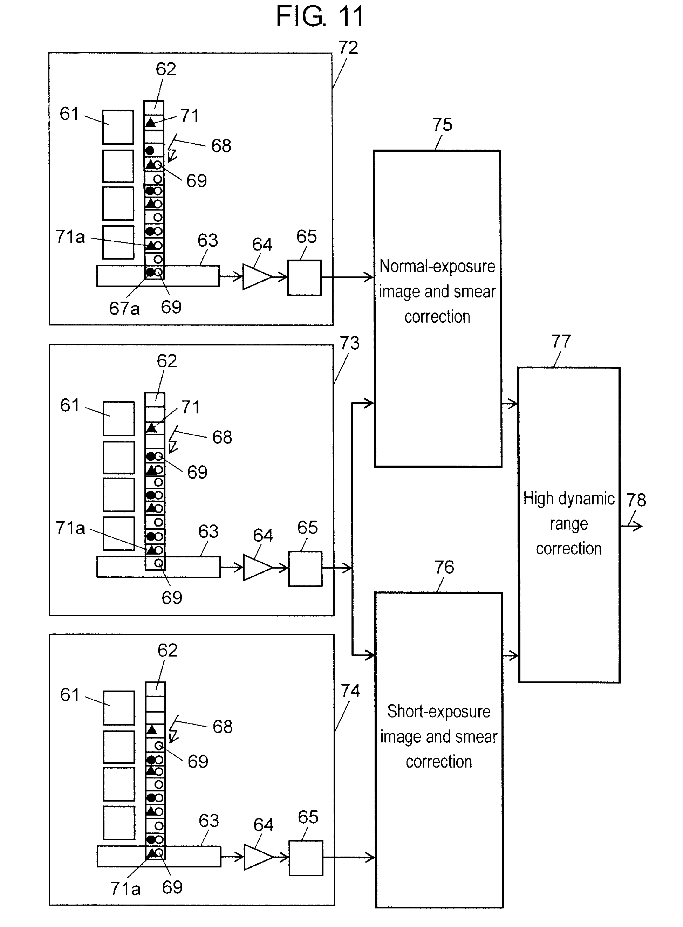

Fig. 11 is a diagram illustrating a smear correction method and dynamic range processing in the third exemplary embodiment of the present invention. Solid-state imaging devices 72, 73, and 74 that output different types of signals are distinguished by giving reference numerals at the left in Fig. 11. More specifically, solid-state imaging device 72 is a solid-state imaging device outputting an image signal including smear signal in normal exposure. Solid-state imaging device 73 is a solid-state imaging device outputting a smear signal. Solid-state imaging signal 74 is a solid-state imaging device outputting an image signal including a smear signal in short exposure.

In normal-exposure image and smear correction 75 a smear signal that is output from solid-state imaging device 73 is subtracted from an image signal including a smear signal in short exposure that is output from solid-state imaging device 74, and an image signal without smear signal in normal exposure is output. On the other hand, in short-exposure image and smear correction 76, a smear signal that is output from solid-state imaging device 73 is subtracted from an image signal including smear signal in short exposure that is output from solid-state imaging device 74, and an image signal without smear signal in short exposure is output. In high dynamic range correction 77, the light intensity/voltage characteristic in normal exposure gained through normal-exposure image and smear correction 75 is combined with the light intensity/voltage characteristic in short exposure gained through short exposure image and smear correction 76, and then gray level is corrected. High dynamic range correction 77 outputs an image signal processed using the light intensity/voltage characteristic with corrected gray level.

As shown in the diagram in Fig. 11, smear correction and dynamic range processing in the third exemplary embodiment of the present invention applies high dynamic range processing to both the image signal in normal exposure after subtracting the smear signal and the image signal in short exposure after subtracting the smear signal, which are both image signals without smear signal. This eliminates smear and also applies correction that sharpens the image to a captured image under normal exposure that is difficult to see due to saturated pixels and smear.

In addition, the present invention uses an image signal of only smear that does not transfer a charge of an optical element, so as to correct smear in a temporally- and spatially-immediate image signal of light-receiving element in normal exposure and short exposure. This reduces an error.

### INDUSTRIAL APPLICABILITY

The present invention is applicable to solid-state imaging devices with smear correction function, smear correction methods for solid-state imaging devices, and imaging apparatuses using the device and method, such as digital cameras, car cameras, monitoring cameras and camcorders.

## Claims

1. A solid-state imaging device employing a multiple-stage vertical CCD, the solid-state imaging device comprising:
a vertical transfer section for transferring a first signal of an image signal, which includes a smear signal and is converted to a charge in a light-receiving element, and a second signal of only a smear signal alternately to each register of vertical registers;
a horizontal transfer section for alternately transferring the first signal and the second signal via a same transfer channel; and
a subtractor for subtracting the second signal from the first signal,
wherein
a smear correction function is executed, the smear correction function being a function to gain an image signal without smear signal by subtracting the second signal from the first signal.

2. The solid-state imaging device of claim 1, wherein the multiple-stage vertical CCD is a double-stage vertical CCD.

3. The solid-state imaging device of claim 1, wherein the multiple-stage vertical CCD being a triple-stage vertical CCD.

4. An imaging apparatus comprising:
the solid-state imaging device of one of claims 1 to 3.

5. A smear correction method for a solid-state imaging device employing a multiple-stage vertical CCD, the method comprising:
vertically transferring a first signal of an image signal, which includes a smear signal and is converted to a charge in a light-receiving element, and a second signal of only a smear signal alternately to each register of vertical registers;
horizontally transferring the first signal and the second signal alternately through a same transfer channel; and
subtracting the second signal from the first signal,
wherein
an image signal without smear signal is gained by subtracting the second signal from the first signal.

6. The smear correction method of claim 5, wherein the multiple-stage vertical CCD is a double-stage vertical CCD.

7. The smear correction method of claim 5, wherein the multiple-stage vertical CCD is a triple-stage vertical CCD.

8. An imaging apparatus comprising:
the smear correction method for a solid-state imaging device of one of claims 5 to 7.

9. A solid-state imaging device employing a multiple-stage vertical CCD, the solid-state imaging device comprising:
a saturated pixels determinator for determining the number of saturated pixels;
a mode switch for switching between a smear correction mode and a high dynamic range mode based on a determination result of the saturated pixels determinator, the smear correction mode being activated when the number of saturated pixels in the multiple-stage vertical CCD is less than a predetermined threshold, the high dynamic range mode being activated when the number of saturated pixels is not less than the predetermined threshold;
a vertical transfer section for transferring a first signal of an image signal, which includes a smear signal and is converted to a charge in a light-receiving element of the multiple-stage vertical CCD, and a second signal of only the smear signal alternately to each register of vertical registers in the smear correction mode;
a horizontal transfer section for alternately transferring the first signal and the second signal through a same transfer channel; and
a subtractor for subtracting the second signal from the first signal,
wherein
when the mode switch activates the smear correction mode,
the horizontal transfer section alternately transfers the first signal of the image signal including the smear signal and the second signal of only the smear signal through the same transfer channel, and
a smear correction function is executed, the smear correction function being a function to gain an image signal without smear signal by subtracting the second signal from the first signal.

10. The solid-state imaging device of claim 9,
wherein the multiple-stage vertical CCD is a double-stage vertical CCD.

11. The solid-state imaging device of claim 9,
wherein the multiple-stage vertical CCD is a triple-stage vertical CCD.

12. An imaging apparatus comprising:
the solid-state imaging device of one of claims 9 to 11.

13. A smear correction method for a solid-state imaging device employing a multiple-stage vertical CCD, the method comprising:
determining the number of saturated pixels in the multiple-stage vertical CCD; and
switching between a smear correction mode and a high dynamic range mode based on a result of the step of determining the number of saturated pixels, the smear correction mode being activated when the number of saturated pixels is less than a predetermined threshold, and the high dynamic range mode being activated when the number of saturated pixels is not less than the predetermined threshold,
wherein
when the smear correction mode is activated,
the smear correction mode is executed to gain an image signal without smear signal by subtracting the second signal from the first signal, the smear correction mode executing the steps of:
vertically transferring a first signal of an image signal, which includes a smear signal and is converted to a charge in a light-receiving element in the multiple-stage vertical CCD, and a second signal of only a smear signal, alternately to each register of vertical registers;
horizontally transferring the first signal and the second signal alternately through a same transfer channel; and
subtracting the second signal from the first signal.

14. An imaging apparatus comprising:
the smear correction method for a solid-state imaging device of claim 13,
wherein the multiple-stage vertical CCD is a double-stage vertical CCD.

15. An imaging apparatus comprising:
the smear correction method for a solid-state imaging device of claim 13,
wherein the multiple-stage vertical CCD is a triple-stage vertical CCD.

16. An imaging apparatus comprising:
the smear correction method for a solid-state imaging device of one of claims 13 to 15.

17. A solid-state imaging device employing a multiple-stage vertical CCD, the device comprising:
the multiple-stage vertical CCD of not less than triple-stage;
a vertical transfer section for transferring a first signal of an image signal, which includes a smear signal and is converted to a charge in a light-receiving element in normal exposure, a second signal of only a smear signal, and a third signal of an image signal that is converted to a charge in the light-receiving element in short exposure, the vertical transfer section alternately transferring the first signal, the second signal, and the third signal to each register in vertical registers;
a horizontal transfer section for transferring in sequence the first signal, the second signal, and the third signal through a same transfer channel;
a subtractor for subtracting the second signal from the first signal, and also subtracting the second signal from the third signal; and
a high dynamic range processor,
wherein
smear correction of a normal-exposure image is executed to gain a normal-exposure image signal without smear signal by subtracting the second signal from the first signal,
smear correction of a short-exposure image is executed to gain a short-exposure image signal without the smear signal by subtracting the second signal from the third signal, and
high dynamic range processing is executed to gain an image after correcting high dynamic range based on the normal-exposure image signal after the smear correction and the short-exposure image signal after the smear correction.

18. An imaging apparatus comprising:
the solid-state imaging device of claim 17.

## Amended claims

### Amended claims under Art. 19.1 PCT

**1.** (deleted)

**2.** (deleted)

**3.** (deleted)

**4.** (deleted)

**5.** (deleted)

**6.** (deleted)

**7.** (deleted)

**8.** (deleted)

**9.** A solid-state imaging device employing a multiple-stage vertical CCD, the solid-state imaging device comprising:
a saturated pixels determinator for determining the number of saturated pixels
a mode switch for switching between a smear correction mode and a high dynamic range mode based on a determination result of the saturated pixels determinator, the smear correction mode being activated when the number of saturated pixels in the multiple-stage vertical CCD is less than a predetermined threshold, the high dynamic range mode being activated when the number of saturated pixels is not less than the predetermined threshold;
a vertical transfer section for transferring a first signal of an image signal, which includes a smear signal and is converted to a charge in a light-receiving element of the multiple-stage vertical CCD, and a second signal of only the smear signal alternately to each register of vertical registers in the smear correction mode;
a horizontal transfer section for alternately transferring the first signal and the second signal through a same transfer channel; and
a subtractor for subtracting the second signal from the first signal,
wherein
when the mode switch activates the smear correction mode,
the horizontal transfer section alternately transfers the first signal of the image signal including the smear signal and the second signal of only the smear signal through the same transfer channel, and
a smear correction function is executed, the smear correction function being a function to gain an image signal without smear signal by subtracting the second signal from the first signal.

**10.** The solid-state imaging device of claim 9,
wherein the multiple-stage vertical CCD is a double-stage vertical CCD.

**11.** The solid-state imaging device of claim 9,
wherein the multiple-stage vertical CCD is a triple-stage vertical CCD.

**12.** An imaging apparatus comprising:
the solid-state imaging device of one of claims 9 to 11.

**13.** A smear correction method for a solid-state imaging device employing a multiple-stage vertical CCD, the method comprising:
determining the number of saturated pixels in the multiple-stage vertical CCD; and
switching between a smear correction mode and a high dynamic range mode based on a result of the step of determining the number of saturated pixels, the smear correction mode being activated when the number of saturated pixels is less than a predetermined threshold, and the high dynamic range mode being activated when the number of saturated pixels is not less than the predetermined threshold,
wherein
when the smear correction mode is activated,
the smear correction mode is executed to gain an image signal without smear signal by subtracting the second signal from the first signal, the smear correction mode executing the steps of:
vertically transferring a first signal of an image signal, which includes a smear signal and is converted to a charge in a light-receiving element in the multiple-stage vertical CCD, and a second signal of only a smear signal, alternately to each register of vertical registers;
horizontally transferring the first signal and the second signal alternately through a same transfer channel; and
subtracting the second signal from the first signal.

**14.** An imaging apparatus comprising:
the smear correction method for a solid-state imaging device of claim 13,
wherein the multiple-stage vertical CCD is a double-stage vertical CCD.

**15.** An imaging apparatus comprising:
the smear correction method for a solid-state imaging device of claim 13,
wherein the multiple-stage vertical CCD is a triple-stage vertical CCD.

**16.** An imaging apparatus comprising:
the smear correction method for a solid-state imaging device of one of claims 13 to 15.

**17.** (deleted)

**18.** (deleted)
